# FASCICULE DE BREVET EUROPEEN

(11) **EP 1 138 128 B1**
(45) Date de publication et mention de la délivrance du brevet: **11.02.2004**
(21) Numéro de dépôt: 99958254.7
(22) Date de dépôt: 07.12.1999
(51) Int. Cl.: H04B 5/00, G06K 19/07

(54) **DISPOSITIF ELECTRONIQUE DE COMMUNICATION SANS CONTACT A SOURCE D'ENERGIE AUXILIAIRE OPTIONNELLE**
ELEKTRONISCHE VORRICHTUNG ZUR KONTAKTLOSEN ÜBERTRAGUNG MIT WAHLWEISER HILFSENERGIEQUELLE
CONTACTLESS ELECTRONIC COMMUNICATION DEVICE WITH OPTIONAL AUXILIARY POWER SOURCE

(30) Priorité: 09.12.1998 FR 9815543
(43) Date de publication de la demande: 04.10.2001
(73) Titulaire: Gemplus, 13881 Gémenos Cedex (FR)
(72) Inventeur: DEFFONTAINES, Thierry, F-13380 Roquefort la Bédoule (FR); RINCEL, Philippe, F-13540 Puy Ricard (FR); CAYE, Nathalie, F-59000 Lille (FR)
(86) Numéro de dépôt international: PCT/FR1999/003032
(87) Numéro de publication internationale: WO 2000/035114

(56) Documents cités:
- EP-A- 0 875 851
- GB-A- 2 292 866
- US-A- 5 473 145
- US-A- 5 736 729

## Description

L'invention concerne les systèmes électroniques de communication sans contact dans lesquels au moins un dispositif électronique de communication sans source d'énergie électrique interne porté par un utilisateur communique par des signaux électromagnétiques avec un dispositif électronique d'interrogation / lecture / écriture.

De tels systèmes électroniques de communication sans contact sont mis en oeuvre, par exemple, pour le contrôle d'accès à des pistes de skis, des locaux, des garages, des transports publics, etc ... car l'absence de contact augmente la vitesse de passage des utilisateurs tout en permettant un échange d'informations entre le dispositif électronique porté et le dispositif d'interrogation / lecture / écriture de manière à gérer les accès en fonction de certains critères.

Le dispositif électronique d'interrogation / lecture / écriture émet des signaux électromagnétiques, par exemple en radiofréquence, qui sont détectés par le dispositif électronique de communication porté par l'utilisateur et servent, d'une part, de support de transmission des informations à échanger et, d'autre part, de source d'énergie pour l'alimentation électrique du dispositif électronique de communication.

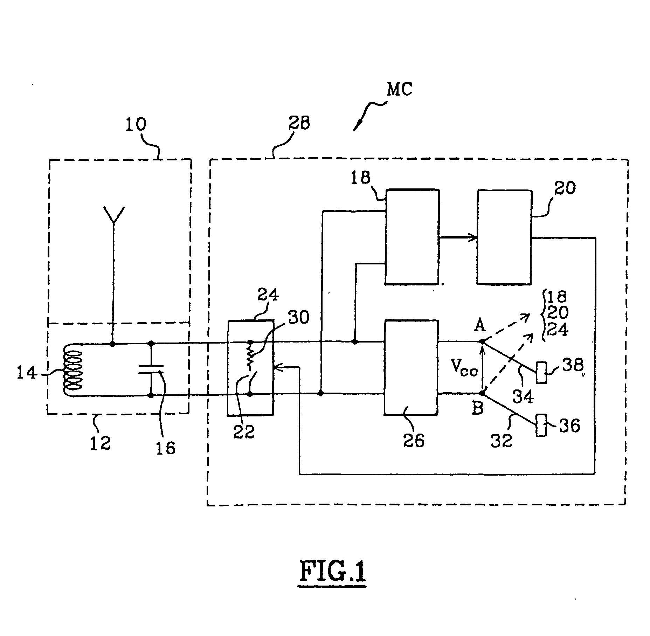

A cet effet, ce dernier comprend, par exemple, comme le montre le schéma simplifié de la figure 1, une antenne 10 constituée d'un circuit résonant 12 comprenant une bobine 14 et un condensateur 16. Les signaux radiofréquence reçus par l'antenne 10 provenant du dispositif d'interrogation / lecture / écriture sont appliqués à un démodulateur 18 qui détecte les signaux basse fréquence de modulation contenant les informations binaires émises par le dispositif d'interrogation / lecture / écriture.

Ces signaux binaires d'information sont traités par un circuit de traitement numérique 20 pour les interpréter et élaborer éventuellement une réponse sous forme de signaux binaires qui sont transmis au dispositif d'interrogation / lecture / écriture via un modulateur 24 représenté par un interrupteur 22 et une impédance de charge (30) connectés aux bornes du circuit résonant 12.

Les signaux radiofréquence détectés par l'antenne 10 sont également appliqués à un circuit de redressement et filtrage 26 qui fournit sur des bornes A et B une tension d'alimentation V_{CC} aux circuits 18, 20 et 24.

Le dispositif électronique de communication sans contact selon le schéma de la figure 1 est réalisé sous la forme d'un microcircuit 28 qui est disposé dans une carte plastique, type carte bancaire, la bobine 14 de l'antenne étant disposée suivant la périphérie de la carte, l'ensemble constituant un module de communication MC.

Il est à noter que le condensateur 16 est réalisé pour partie dans le microcircuit 28 et pour partie à l'extérieur de celui-ci en vue du réglage d'accord du circuit résonant 12.

Un tel microcircuit peut aussi être disposé dans le boîtier d'une montre, le matériau du boîtier étant prévu pour permettre le passage des signaux électromagnétiques vers l'antenne à l'intérieur du boîtier.

De tels systèmes électroniques de communication sans contact présentent l'inconvénient majeur que leur distance de fonctionnement est limitée, par exemple quelques dizaines de centimètres à la fréquence de 13,56 MHz en lecture / écriture, du fait de l'insuffisance de l'énergie électrique d'alimentation qui est effectivement disponible pour le microcircuit, au-delà d'une certaine distance entre le dispositif d'interrogation / lecture / écriture et l'antenne.

Par ailleurs, cette insuffisance de l'énergie électrique d'alimentation limite la vitesse et donc là puissance de calcul du microcircuit, ce qui ne permet pas de mettre en oeuvre des transactions complexes nécessitant des traitements de données importants et/ou des calculs cryptographiques à des fins de sécurité dans un court intervalle de temps.

Par ailleurs, il n'est pas possible d'augmenter l'énergie de rayonnement des dispositifs d'interrogation / lecture / écriture car leur puissance est limitée pour ne pas perturber les installations voisines et l'environnement en général, conformément à la réglementation en vigueur.

L'invention a donc pour but de réaliser un dispositif électronique de communication sans contact qui présente une distance maximale de fonctionnement et une puissance de calcul plus grandes que celles des dispositifs de l'art antérieur.

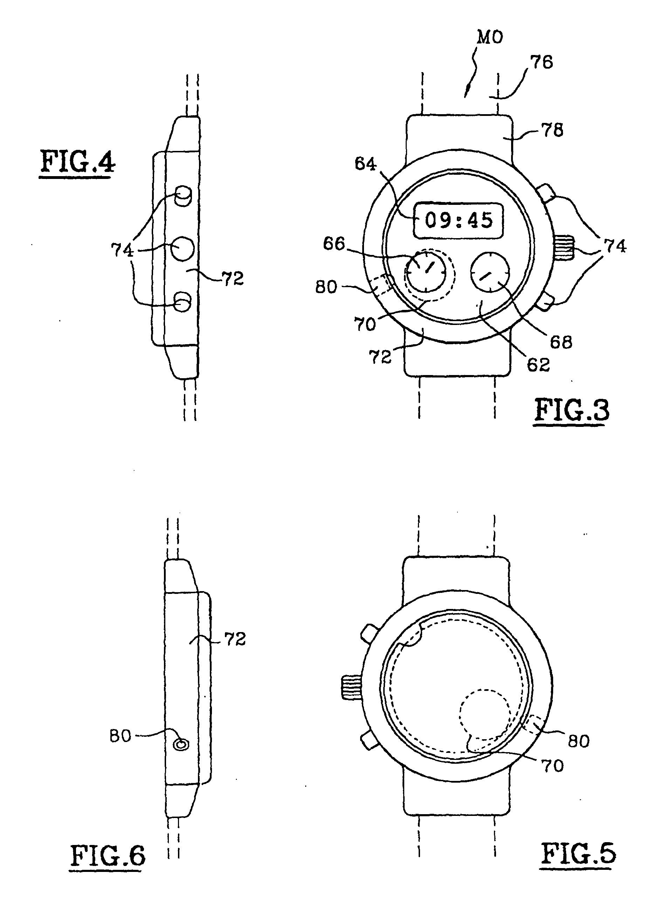

Le document GB-A-2292866 décrit une carte sans contact dotée d'une source d'alimentation interne de type pile. Cette dernière fait partie intégrante de la structure de la carte dont elle est définitivement solidaire. A cet égard, voir la description notamment Page 1 lignes 11-16 (figure 5), ainsi que Pages 8 lignes 10-13 (cf. également : pages : 9L10-12, L21-22, 12L19-20, 13L19). Ce document ne divulgue pas un dispositif de communication sans contact apte à supporter une alimentation externe, portée par des moyens de support structurellement indépendants du dispositif (P3L26-31, P9L5-10). Ainsi, la source d'énergie ne fait pas partie intégrante du dispositif de communication, dont elle est structurellement indépendante.

Le document EP-A-0875851 décrit un support de données sans contact incorporant une source d'énergie (cf. abrégé : "data carrier includes a battery" ). Cette source d'énergie ("intemal battery", notamment en Colonne 4 Ligne 37, C16L10 et C16L34) fait partie intégrante du support de données. Ne sont donc décrites que des cartes avec batterie interne (C1L22-24 et C2L5-8). Le fait que la source d'énergie soit définitivement solidaire du support de données conditionne le problème technique (C2L56-58), qui vise à palier un épuisement de la pile. La solution proposée consiste d'ailleurs à pouvoir bénéficier d'un mode dégradé permettant au support de données de fonctionner sans pile (C4L50-54). Ceci implique qu'il est impossible de changer la pile, et donc que cette dernière est intégrée.

Le document US-A-5736729 décrit un boîtier sans contact apte à recevoir par insertion une simple carte plastique personnalisable ; la carte étant alors immobilisée par un système de verrouillage mécanique.

L'invention est définie dans les revendications, dont le préambule correspond à l'enseignement des documents GB-A-2292866 et EP-A-0875851.

D'autres caractéristiques et avantages de l'invention apparaîtront avec la description de certains de ses modes de réalisation, celle-ci étant réalisée en se référant aux dessins ci-annexés sur lesquels :
- la figure 1 est un schéma électronique fonctionnel d'un dispositif électronique de communication présentant des caractéristiques de l'invention,
- les figures 2A et 2B montrent une carte à microcircuit réalisant un dispositif élecronique de communication sans contact et un porte-carte selon l'invention, cette dernière étant apte à recevoir la carte de la figure 2A,
- la figure 3 est une vue de dessus d'une montre contenant une pile électrique,
- la figure 4 est une vue de droite de la montre de la figure 3,
- la figure 5 est une vue de dessous de la montre de la figure 3,
- la figure 6 est une vue de gauche de la montre de la figure 3,
- la figure 7 est une vue en perspective d'un boîtier contenant un module de communication sans contact et prévu pour s'adapter à une montre contenant une pile électrique,
- la figure 8 est une vue en coupe du boîtier de la figure 7,
- la figure 9 est une vue en perspective éclatée du boîtier de la figure 7 et du boîtier de la montre contenant la pile électrique,
- la figure 10 est une vue en perspective éclatée d'une variante de combinaison entre un boîtier contenant un module de communication et une montre contenant une pile électrique,
- la figure 11 est une vue de dessous en perspective du boîtier de la figure 10,
- la figure 12 est une vue en perspective d'un boîtier contenant un module de communication sans contact qui est associé à un combiné de téléphone mobile selon l'invention, et
- la figure 13 est une vue en perspective d'un combiné de téléphone mobile portable associé à une carte à microcircuit selon la figure 2A.

Le schéma de la figure 1 d'un dispositif électronique sans contact ne sera pas décrit à nouveau pour les éléments connus de l'art antérieur.

Pour mettre en oeuvre l'invention, il doit être modifié pour connecter par des conducteurs 32, 34 les bornes de sortie A et B du circuit de redressement et filtrage 26 à deux bornes de contact 36 et 38 disposées à l'extérieur du module MC contenant le microcircuit 28 et l'antenne à circuit résonant 10.

Le module de communication MC dit sans contact est habituellement logé dans l'épaisseur d'une carte plastique 40, la bobine 14 de l'antenne 10 étant logée à la périphérie de la carte suivant une ou plusieurs spires. Selon l'invention, les bornes de contact 36 et 38 sont disposées sur la surface de la carte 40.

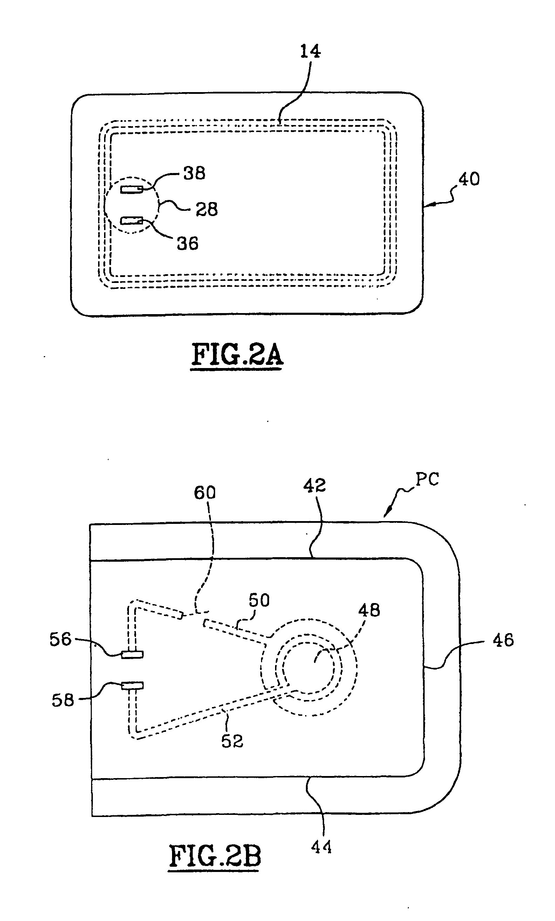

La carte 40 coopère avec un porte-carte PC de manière à s'insérer, par glissement par exemple, dans des rainures en relief 42 et 44 présentant une butée 46. Le porte-carte sert de support à une pile électrique 48 qui est logée dans l'épaisseur du porte-carte. Les bornes électriques de la pile 48 sont connectées par des conducteurs 50 et 52 logés dans l'épaisseur du porte-carte, à des bornes de contact 56 et 58 disposées à la surface du porte-carte de manière à coopérer respectivement avec les bornes de contact 36 et 38 de la carte 40, étant entendu que la carte 40 de la figure 2A doit être retournée pour s'insérer dans les rainures 42 et 44.

La connexion électrique entre la pile électrique 48 et les bornes de contact 56 et 58 peut être permanente ou intermittente à la demande de l'utilisateur à condition de connecter en série un interrupteur 60, sur le conducteur 50 par exemple, qui est manipulé par l'utilisateur.

Par cette combinaison de la carte 40 avec le porte-carte PC, le microcircuit 28 est alimenté par la tension de la pile électrique 48 pouvant venir remplacer ou éventuellement s'additionner à la tension fournie par le circuit de redressement et filtrage 26. Il en résulte une tension d'alimentation V_{CC} constante car indépendante de la distance entre la carte 40 et le dispositif d'interrogation / lecture / écriture, d'où une distance maximale de détection plus grande, une plus grande durée disponible pour le traitement et une vitesse de calcul plus élevée.

Il existe des cartes à microcircuit dites "combicarte" qui sont prévues, d'une part, pour communiquer avec un dispositif d'interrogation / lecture / écriture à distance mais aussi, d'autre part, pour communiquer avec un dispositif d'interrogation / lecture / écriture avec contacts. A cet effet, ces combicartes ont un microcircuit 28 qui est connecté à des bornes de contact de type classique, par exemple selon la norme ISO 7816-2.

Ces combicartes peuvent être utilisées dans le cadre de l'invention avec le porte-carte PC à condition que les bornes de contact 56 et 58 aient une disposition conforme à la norme précitée.

De manière générale, les bornes de contact 36 et 38 de la carte sans contact 40 et celles 56, 58 du porte-carte PC, respecteront cette norme, ce qui ipso facto permettra l'utilisation des combicartes par le porte-carte PC.

L'interrupteur 60 peut être du type micro-interrupteur à bouton-poussoir qui est logé dans l'épaisseur du porte-carte, le bouton-poussoir étant par exemple disposé sur la face du porte-carte opposée à celle recevant la carte 40.

La pile électrique 48 est du type extra-plate et est logée dans une cavité du porte-carte PC en vue de son remplacement éventuel

Bien entendu, le micro-interrupteur et son bouton poussoir peuvent être logés dans la cavité de la pile extra-plate.

Dans l'exemple de réalisation de l'invention selon les figures 2A et 2B, le module électronique sans contact MC est porté par une carte plastique 40 du type carte bancaire tandis que la pile électrique 48 est portée par un porte-carte PC sur lequel vient s'insérer la carte 40 de manière à établir des contacts électriques entre les bornes 36, 38, 56 et 58.

L'invention s'applique également à tout module électronique sans contact tel que modifié pour présenter des bornes de contact 36 et 38 de manière à se connecter à des bornes de contact d'une pile portée par un objet tel qu'une montre électronique ou un combiné de téléphone mobile.

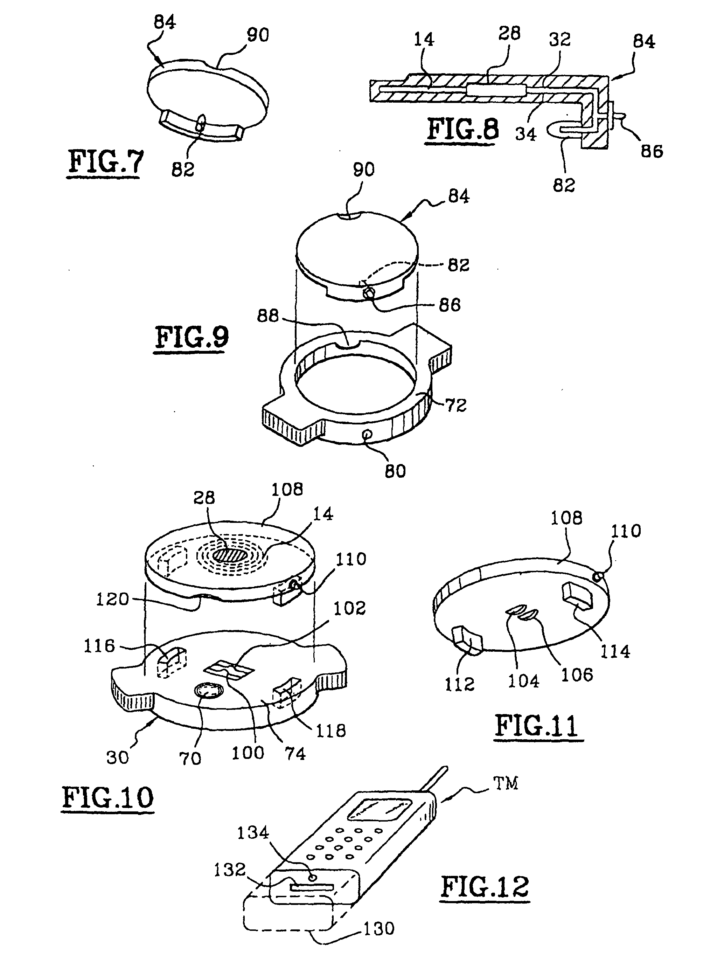

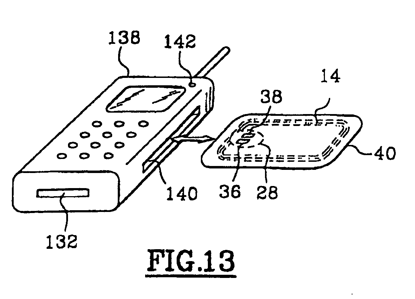

L'objet porteur de la pile doit être modifié pour présenter des bornes de contact équivalentes aux bornes 56 et 58 du porte-carte PC et il en est de même des bornes de contact 36 et 38 du module pour s'adapter aux bornes 56 et 58 de l'objet porteur de la pile électrique. Les figures 4 à 11 montrent deux exemples de combinaison entre un module électronique sans contact et une montre à pile électrique tandis que les figures 12 et 13 montrent deux exemples de combinaison entre un module électronique sans contact et un téléphone mobile.

Une montre MO (figures 3 à 11) de type électronique comprend un circuit électronique (non représenté), un dispositif de visualisation 62 à un ou plusieurs cadrans 64, 66, 68 et une pile d'alimentation électrique 70, ces trois éléments étant disposés dans un boîtier 72 muni sur sa périphérie de divers boutons de commande 74. Le boîtier 72 est maintenu au poignet par un bracelet 76 via des articulations de raccordement 78.

Selon l'invention, la pile électrique 70 est connectée non seulement au circuit électronique et aux cadrans mais aussi à un connecteur 80 (figures 3 à 9), du type femelle par exemple, qui est porté par la partie latérale du boîtier de montre 72. Ce connecteur 80 coopère avec un connecteur mâle 82 porté par un boîtier 84 contenant le microcircuit 28, la bobine d'antenne 14 et les conducteurs électriques 32 et 34. Un micro-interrupteur 86 est connecté en série sur le conducteur 32 de manière à alimenter ou non le microcircuit 28 à la demande de l'utilisateur.

Le boîtier 84 est fixé sur le fond arrière de la montre par le clipsage des connecteurs mâle 82 et femelle 80 et par un ergot 88 sous lequel vient s'emmancher une partie amincie 90 du boîtier 84.

Au lieu d'être disposé sur la face latérale de la montre, le connecteur de sortie de la pile électrique 70 peut être disposé sur le fond arrière du boîtier de montre sous forme de deux contacts 100 et 102 (Figures 10 et 11) qui coopèrent respectivement avec deux plots 104 et 106 d'un boîtier 108 contenant le microcircuit électronique 28, la bobine d'antenne 14 et les conducteurs électriques 32 et 34.

Les plots 104 et 106 sont connectés aux points A et B du microcircuit électronique 28 par les conducteurs électriques 32 et 34 dont l'un est muni d'un micro-interrupteur 110 qui est actionné par l'utilisateur.

Le boîtier 108 est fixé sur le fond arrière de la montre par deux pattes 112, 114 qui coopèrent respectivement avec deux logements 116 et 118 disposés dans le fond arrière de la montre. Le boîtier 108 présente une partie périphérique amincie 120 pour le déclipsage.

Lorsque la pile électrique est sur un téléphone mobile TM (Figure 12), le microcircuit électronique 28 et son antenne sont, par exemple, disposés dans un boîtier 130 parallélépipédique présentant sur une face deux contacts mâles non représentés. Ces deux contacts viennent s'insérer dans des contacts femelles 132 du téléphone mobile, ceux utilisés pour la recharge de la batterie du téléphone. Un micro-interrupteur 134 est disposé sur un conducteur électrique 32 ou 34 et est actionné par l'utilisateur par un bouton-poussoir porté par le boîtier 130.

Certains téléphones mobiles 138 (Figure 13) sont équipés d'un connecteur 140 (Figure 13) dans lequel peut venir s'insérer une carte du type bancaire en vue d'ajouter des fonctions supplémentaires au téléphone mobile. Dans ce cas, la carte sans contact 40 de la figure 2A peut venir s'insérer dans le connecteur 140 de manière à connecter ses contacts 36 et 38 aux contacts d'alimentation électrique du connecteur 140. L'interrupteur 142 est disposé sur le téléphone mobile 138.

Il est à noter que l'interrupteur 60 ou 142 est porté par le porte-carte PC ou le téléphone mobile 138, qui contient la source d'énergie électrique, tandis que l'interrupteur 86 ou 134 est porté par le boîtier 84 ou 130, qui contient le microcircuit 28.

Il est à noter que la source d'énergie électrique peut être une batterie rechargeable, une pile électrique amovible ou non, des cellules dites solaires, par exemple du type photovoltaïque.

## Revendications

1. Dispositif électronique de communication électromagnétique sans contact et ne disposant pas de source d'énergie interne du type comprenant dans un module de communication (MC) :
- des moyens de réception (10) de signaux électromagnétiques,
- des moyens de traitement (18, 20, 24) des signaux électromagnétiques reçus, et
- des moyens de redressement et filtrage (26) des signaux électromagnétiques reçus pour fournir, sur deux bornes de sortie (A, B), une tension d'alimentation (Vcc) aux moyens de traitement (18, 20,24), **caractérisé en ce qu'**il comporte des moyens de connections (36, 38, 56, 58, 80, 82, 100, 102, 104, 106, 132, 140) aptes à connecter les bornes de sortie (A et B) du circuit de redressement et filtrage (26) à une source d'énergie électrique externe (48, 70) portée par des moyens de support (PC, MO, TM 138).

2. Dispositif selon la revendication 1, **caractérisé en ce que** les moyens de connexion comprennent un interrupteur (60, 86, 110, 134, 142) pour établir ou couper la connexion entre la source d'énergie externe (48, 70) et les bornes de sortie (A, B) du circuit de redressement et filtrage (26).

3. Dispositif selon la revendication 1 ou 2, **caractérisé en ce que** les moyens de connexion comprennent :
- dans le module (MC, des conducteurs (32, 34) pour connecter les bornes de sortie (A, B) du circuit de redressement et filtrage à des premières bornes de contact (36, 38, 82, 104, 106),
- dans les moyens de support, des conducteurs (50 52) pour connecter la source d'énergie électrique externe (48, 70) à des deuxièmes bornes de contact (56, 58, 80, 100, 102, 132, 140), et
- des moyens pour connecter et maintenir entre elles lesdites premières et secondes bornes de contact.

4. Utilisation d'un dispositif selon la revendication 3 dans un module sans contact (MC) porté par une carte de type bancaire, **caractérisé :**
- **en ce que** les moyens de support de la source d'énergie électrique externe comprennent un porte-carte (PC) et
- **en ce que** les moyens de connexion et de maintien desdites premières (36, 38) et deuxièmes (56, 58) bornes de contact comprennent des moyens de guidage et de butée (42, 44, 46) de la carte (40) dans le porte-carte (PC) de manière à faire coïncider lesdites premières et deuxièmes bornes de contact.

5. Utilisation d'un dispositif selon la revendication 3 dans son application à un module sans contact (MC) disposé dans un boîtier (84), **caractérisé :**
- **en ce que** les moyens de support de la source d'énergie électrique externe comprennent une montre (MO) disposant de sa propre énergie électrique (70),
- **en ce que** les premières bornes de contact comprennent un connecteur (82) disposé sur le boîtier (84) du module,
- **en ce que** les deuxièmes bornes de contact comprennent un connecteur (80) disposé sur le boîtier (72) de la montre (MO), et
- lesdits connecteurs (80, 82) coopérant l'un avec l'autre pour établir les connexions électriques et étant maintenus dans cette position par des moyens de maintien (88, 90).

6. Utilisation d'un dispositif selon la revendication 3 dans un module sans contact (MC) disposé dans un boîtier (108) **caractérisé :**
- **en ce que** les moyens de support de la source d'énergie électrique externe comprennent une montre (MO) disposant de sa propre énergie électrique (70),
- **en ce que** les premières bornes de contact comprennent des plots (104, 106) disposés sur le fond du boîtier du module (MC), et
- **en ce que** les deuxièmes bornes de contact comprennent des plots (100, 102) disposés sur le fond arrière du boîtier de la montre,
- **en ce que** les moyens de connexion et de maintien desdites premières et deuxièmes bornes comprennent des ergots (112, 114) portés par le boîtier (108) du module (MC), qui viennent s'enclipser dans des logements correspondants (116, 118) du fond arrière du boîtier de montre.

7. Utilisation d'un dispositif selon la revendication 3 dans un module sans contact (MC) disposé dans un boîtier (130), **caractérisé :**
- **en ce que** les moyens de support de la source d'énergie électrique externe comprennent un appareil de téléphonie mobile (TM) comportant des plots (132) connectés à une batterie électrique rechargeable,
- **en ce que** les deuxièmes bornes de contact comprennent les plots de recharge (132) de la batterie de l'appareil de téléphonie mobile (TM), et
- **en ce que** les premières bornes de contact comprennent des plots qui coopèrent avec les plots (132) de recharge.

8. Utilisation d'un dispositif selon la revendication 3 dans un module sans contact (MC) porté par une carte de type bancaire (40) **caractérisé:**
- **en ce que** les moyens de support de la source d'énergie électrique externe comprennent un appareil de téléphonie mobile (138) comportant un connecteur (140) prévu pour coopérer avec les contacts d'une carte de type bancaire ,
- **en ce que** la carte de support du module sans contact (MC) comprend les premières bornes de contact,
- **en ce que** le connecteur (140) comprend les deuxièmes bornes de contact connectées à la somme d'énergie électrique et,
- **en ce que** la connexion entre les premières et deuxièmes bornes de contact s'effectue par insertion de la carte (40) dans le connecteur (140).

9. Dispositif selon une quelconque des revendications précédentes 1 à 3 **caractérisé en ce que** la source d'énergie électrique externe est une pile amovible.

## Patentansprüche

1. Elektronische Vorrichtung zur kontaktlosen elektromagnetischen Kommunikation ohne interner Energiequelle, mit einem Kommunikationsmodul (MC):
- Empfangsmitteln (10) von elektromagnetischen Signalen,
- Verarbeitungsmitteln (18, 20, 24) der empfangenen elektromagnetischen Signale, und
- Gleichrichter- und Filtermitteln (26) der empfangenen elektromagnetischen Signale, um an zwei Ausgangsklemmen (A, B) eine Versorgungsspannung (v_{cc}) für die Verarbeitungsmittel (18, 20, 24) zu liefern, **dadurch gekennzeichnet, dass** sie Anschlussmittel (36, 38, 56, 58, 80, 82, 100, 102, 104, 106, 132, 140) umfasst, mit denen die Ausgangsklemmen (A und B) der Gleichrichter- und Filterschaltung (26) an eine von Trägermitteln (PC, MO, TM 138) getragene externe elektrische Energiequelle (48, 70) angeschlossen werden können.

2. Vorrichtung nach Anspruch 1, **dadurch gekennzeichnet, dass** die Anschlussmittel einen Schalter (60, 86, 110, 134, 142) umfassen, um den Anschluss zwischen der externen Energiequelle (48, 70) und den Ausgangsklemmen (A, B) der Gleichrichter- und Filterschaltung (26) herzustellen oder zu unterbrechen.

3. Vorrichtung nach Anspruch 1 oder 2, **dadurch gekennzeichnet, dass** die Anschlussmittel umfassen:
- im Modul (MC), Leiter (32, 34) zum Anschluss der Ausgangsklemmen (A, B) der Gleichrichter- und Filterschaltung an erste Kontaktklemmen (36, 38, 82, 104, 106),
- in den Trägermitteln, Leiter (50, 52) zum Anschluss der externen elektrischen Energiequelle (48, 70) an zweite Kontaktklemmen (56, 58, 80, 100, 102, 132, 140), und
- Mittel, um die besagten ersten und zweiten Kontaktklemmen miteinander zu verbinden und festzuhalten.

4. Verwendung einer Vorrichtung nach Anspruch 3 in einem von einer Bankkarte getragenen kontaktlosen Modul (MC), **dadurch gekennzeichnet, dass**:
- die Trägermittel der externen elektrischen Energiequelle einen Kartenträger (PC) umfassen, und
- die Verbindungs- und Festhaltmittel der besagten ersten (36, 38) und zweiten (56, 58) Kontaktklemmen Führungs- und Anschlagmittel (42, 44, 46) der Karte (40) in dem Kartenträger (PC) umfassen, um die besagten ersten und zweiten Kontaktklemmen in Übereinstimmung zu bringen.

5. Verwendung einer Vorrichtung nach Anspruch 3 in einem in einem Gehäuse (84) angeordneten kontaktlosen Modul (MC), **dadurch gekennzeichnet, dass**:
- die Trägermittel der externen elektrischen Energiequelle eine Armbanduhr (MO) umfassen, die über ihre eigene elektrische Energie (70) verfügt,
- die ersten Kontaktklemmen einen in dem Gehäuse (84) des Moduls angeordneten Steckverbinder (82) umfassen,
- die zweiten Kontaktklemmen einen in dem Gehäuse (72) der Armbanduhr (MO) angeordneten Steckverbinder (80) umfassen, und
- die besagten Steckverbinder (80, 82) miteinander zusammenwirken, um die elektrischen Anschlüsse herzustellen, und mit Haltemitteln in dieser Position gehalten werden.

6. Verwendung einer Vorrichtung nach Anspruch 3 in einem in einem Gehäuse (108) angeordneten kontaktlosen Modul (MC), **dadurch gekennzeichnet, dass**:
- die Trägermittel der externen elektrischen Energiequelle eine Armbanduhr (MO) umfassen, die über ihre eigene elektrische Energie (70) verfügt,
- die ersten Kontaktklemmen Kontaktstücke (104, 106) umfassen, die am Boden des Gehäuses des Moduls (MC) angeordnet sind, und
- die zweiten Kontaktklemmen Kontaktstücke (100, 102) umfassen, die an der Rückseite des Gehäuses der Armbanduhr angeordnet sind,
- die Verbindungs- und Haltemittel der besagten ersten und zweiten Klemmen von dem Gehäuse (108) des Moduls (MC) getragene Nocken (112, 114) umfassen, die in entsprechende Aufnahmen (116, 118) der Rückseite des Gehäuses der Armbanduhr eingeklipst werden.

7. Verwendung einer Vorrichtung nach Anspruch 3 in einem in einem Gehäuse (130) angeordneten kontaktlosen Modul (MC), **dadurch gekennzeichnet, dass**:
- die Trägermittel der externen elektrischen Energiequelle ein Mobiltelefongerät (TM) umfassen, der an eine aufladbare elektrische Batterie angeschlossene Kontaktstücke (132) aufweist,
- die zweiten Kontaktklemmen Kontaktstücke (132) zum Aufladen der Batterie des Mobiltelefongeräts (TM) umfassen, und
- die ersten Kontaktklemmen Kontaktstücke umfassen, die mit den Kontaktstücken (132) zum Aufladen zusammenwirken.

8. Verwendung einer Vorrichtung nach Anspruch 3 in einem von einer Bankkarte (40) getragenen kontaktlosen Modul (MC), **dadurch gekennzeichnet, dass**:
- die Trägermittel der externen elektrischen Energiequelle ein Mobiltelefongerät (138) umfassen, das einen Steckverbinder (140) aufweist, der mit den Kontakten einer Bankkarte zusammenwirken soll,
- die Trägerkarte des kontaktlosen Moduls (MC) die ersten Kontaktklemmen umfasst,
- der Steckverbinder (140) die zweiten Kontaktklemmen umfasst, die an der elektrischen Energiesumme angeschlossen sind, und
- die Verbindung zwischen den ersten und zweiten Kontaktklemmen durch Einfügen der Karte (40) in den Steckverbinder (140) hergestellt wird.

9. Vorrichtung nach einem der vorherigen Ansprüche 1 bis 3, **dadurch gekennzeichnet, dass** die externe elektrische Energiequelle eine herausnehmbare Batterie ist.

## Claims

1. An electronic contactless electromagnetic communication device, not having any internal power source, of the type comprising, in a communication module (MC):
- means (10) of receiving electromagnetic signals,
- means (18, 20, 24) of processing the electromagnetic signals received, and
- means (26) of rectifying and filtering the electromagnetic signals received in order to supply, at two output terminals (A, B), a supply voltage (Vcc) to the processing means (18, 20, 24), **characterised in that** it comprises connection means (36, 38, 56, 58, 80, 82, 100, 102, 104, 106, 132, 140) able to connect the output terminals (A and B) of the rectifying and filtering circuit (26) to an external electrical power source (48, 70) carried by support means (PC, MO, TM 138).

2. A device according to Claim 1, **characterised in that** the connection means comprise a switch (60, 86, 110, 134, 142) for establishing or cutting off the connection between the external power source (48, 70) and the output terminals (A, B) of the rectifying and filtering circuit (26).

3. A device according to Claim 1 or 2, **characterised in that** the connection means comprise:
- in the module (MC), conductors (32, 34) for connecting the output terminals (A, B) of the rectifying and filtering circuit to first contact terminals (36, 38, 82, 104, 106),
- in the support means, conductors (50, 52) for connecting the external electrical power source (48, 70) to second contact terminals (56, 58, 80, 100, 102, 132, 140), and
- means for connecting and holding together the said first and second contact terminals.

4. Use of a device according to Claim 3 in a contactless module (MC) carried by a card of the bank type, **characterised:**
- **in that** the support means of the external electrical power source comprise a card holder (PC) and
- **in that** the means of connecting and holding the said first (36, 38) and second (56, 58) contact terminals comprise means (42, 44, 46) of guiding and stopping the card (40) in the card holder (PC) so as to make the said first and second contact terminals coincide.

5. Use of a device according to Claim 3 in its application to a contactless module (MC) disposed in a casing (84), **characterised:**
- **in that** the support means of the external electrical power source comprise a watch (MO) having its own electrical power (70),
- **in that** the first contact terminals comprise a connector (82) disposed on the casing (84) of the module,
- **in that** the second contact terminals comprise a connector (80) disposed on the casing (72) of the watch (MO), and
- the said connectors (80, 82) cooperate with each other in order to establish the electrical connections and being held in this position by holding means (88, 90).

6. Use of a device according to Claim 3 in a contactless module (MC) disposed in a casing (108), **characterised:**
- **in that** the support means of the external electrical power source comprise a watch (MO) having its own electrical power (70),
- **in that** the first contact terminals comprise pads (104, 106) disposed on the base of the casing of the module (MC), and
- **in that** the second contact terminals comprise pads (100, 102) disposed on the rear base of the watch casing,
- **in that** the connection and holding means of the said first and second terminals comprise lugs (112, 114) carried by the casing (108) of the module (MC), which snap into corresponding housings (116, 118) in the rear base of the watch casing.

7. Use of a device according to Claim 3 in a contactless module (MC) disposed in a casing (130), **characterised:**
- **in that** the support means of the external electrical power source comprise a mobile telephone apparatus (TM) comprising pads (132) connected to a rechargeable electrical battery,
- **in that** the second contact terminals comprise the pads (132) for recharging the battery of the mobile telephone apparatus (TM), and
- **in that** the first contact terminals comprise pads which cooperate with the recharging pads (132).

8. Use of a device according to Claim 2 in a contactless module (MC) carried by a card of the bank type (40), **characterised:**
- **in that** the support means of the external electrical power source comprise a mobile telephone apparatus (138) comprising a connector (140) designed to cooperate with the contacts of a card of the bank type,
- **in that** the support card of the contactless module (MC) comprises the first contact terminals,
- **in that** the connector (140) comprises the second contact terminals connected to the electrical power source, and
- **in that** the connection between the first and second contact terminals takes place by insertion of the card (40) into the connector (140).

9. A device according to any one of the preceding claims 1 to 3, **characterised in that** the external electrical supply source is a removable battery.
